(19) Europäisches Patentamt
European Patent Office
Office européen des brevets

(11) Veröffentlichungsnummer: **0 220 463 B1**

(12) **EUROPÄISCHE PATENTSCHRIFT**

(45) Veröffentlichungstag der Patentschrift: **02.01.92**

(51) Int. Cl.[5]: **C09K 19/38**, C08F 20/10

(21) Anmeldenummer: **86112830.4**

(22) Anmeldetag: **17.09.86**

# (54) Flüssigkristalline Phasen aufweisende Polymermaterialien.

(30) Priorität: **28.09.85 DE 3534646**

(43) Veröffentlichungstag der Anmeldung:
**06.05.87 Patentblatt 87/19**

(45) Bekanntmachung des Hinweises auf die Patenterteilung:
**02.01.92 Patentblatt 92/01**

(84) Benannte Vertragsstaaten:
**AT BE CH DE FR GB IT LI NL SE**

(56) Entgegenhaltungen:
**DE-A- 3 430 482**
**US-A- 4 603 187**

**POLYMER BULLETIN, Band 14, Nr. 3/4, 31. Okfober 1985, Seiten 375-378, Springer-Verlag; F. HESSEL et al.: "A new class of liquid crystal side chain polymers mesogenic groups laterally attached to the polymer backbone"**

**DIE MAKROMOLEKULARE CHEMIE, Band 7, Nr. 6, Juni 1986, Seiten 381-388, Basel, CH; S. BERG et al.: "Structural variations of liquid-crystalline polymers: cross-shaped and laterally linked mesogens in main chain and side group polymers"**

(73) Patentinhaber: **MERCK PATENT GESELLSCHAFT MIT BESCHRÄNKTER HAFTUNG**
**Frankfurter Strasse 250 Postfach 4119**
**W-6100 Darmstadt(DE)**

(72) Erfinder: **Finkelmann, Heino, Prof. Dr.**
**Fillibachstrasse 31**
**W-7800 Freiburg(DE)**
Erfinder: **Hessel, Friedrich**
**Auwaldstrasse 78**
**W-7800 Freiburg(DE)**
Erfinder: **Eidenschink, Rudolf, Dr.**
**Kornblumenstrasse 1**
**W-6115 Münster(DE)**
Erfinder: **Krause, Joachim, Dr.**
**Samuel-Morse-Strasse 14**
**W-6110 Dieburg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

CHEMICAL ABSTRACTS, Band 103, Nr. 14, 7. Oktober 1985, Seite 15, Nr. 105502p, Columbus, Ohio, US; M. ENGEL et al.: "Synthesis, structure and properties of liquid crystalline polymers", & PURE APPL. CHEM. 1985, 57(7), 1009-14

MAKROMOLEKULAR CHEMIE, RAPID COMMUNICASIONS, Band 7, Nr. 5, Mai 1986, Seiten 267-271, Heidelberg, DE; S. DIELE et al.: "X-Ray investigations of liquid-crystalline polysiloxanes with paired mesogens"

CRYSTAL RESEARCH AND TECHNOLOGY, Band 19, Nr. 1, 1984, Seiten 55-64; W. WEISSFLOG et al.: "Thermotropic liquid crystalline compounds with lateral long-chain substituents (II)"

## Beschreibung

Die Erfindung betrifft flüssigkristalline Phasen aufweisende Polymermaterialien, deren mesogene Gruppen lateral an das Polymerrückgrat gebunden sind.

Es ist bereits eine Reihe von flüssigkristallinen Seitenkettenpolymeren bekannt. So werden beispielsweise in der DE-OS 29 44 591 und der EP-PS 0 060 335 Organopolysiloxane und in der DE-OS 28 31 909 sowie bei Springer und Weigelt, Makromol. Chem. 184 (1983) 1489, Polymethacrylate mit mesogenen Seitengruppen beschrieben.

Diesen bekannten Seitenkettenpolymeren ist gemeinsam, daß ihre mesogenen Gruppen in 4-Position und damit analog zu den üblichen Flügelgruppen in Richtung der Moleküllängsachse, gegebenenfalls über einen Spacer, an das Polymerrückgrat gebunden sind. Nematische Phasen derartiger Polymermaterialien liegen oft bei Temperaturen oberhalb 100°. Vielfach zeigen solche Materialien auch kristallines Verhalten, verbunden mit dem Fehlen mesomorpher Eigenschaften.

Aufgabe der vorliegenden Erfindung war es, flüssigkristalline Phasen aufweisende Polymermaterialien zu finden, die die beschriebenen Nachteile nicht oder nur in geringem Maß aufweisen. Bisher galten nur vergleichsweise kleine laterale Substituenten als vereinbar mit dem Auftreten flüssigkristalliner Eigenschaften (vgl. Gray in: The Molecular Physics of Liquid Crystals (G.R. Luckhurst und G.W. Gray Hrsg.), London-New York-San Francisco 1979, S. l). Es war daher umso überraschender, daß nun gefunden wurde, daß Polymermaterialien, deren mesogene Gruppen lateral an das Polymerrückgrat gebunden sind, überraschend breite Mesophasenbereiche, eine in weiteren Grenzen variierbare Doppelbrechung und eine positive wie negative diamagnetische Anisotropie aufweisen. Sie sind außerdem leicht Zu Körpern beliebiger Form mit anisotropen Eigenschaften verarbeitbar und weisen eine hohe chemische Stabilität auf.

Gegenstand der Erfindung sind flüssigkristalline Phasen aufweisende Polymermaterialien, deren mesogene Gruppen lateral zur Moleküllängsachse über eine Ring- oder Brückengruppe der mesogenen Einheit an das Polymerrückgrat gebunden sind. Derartige mesogene Gruppen entsprechen der Formel Ia und/oder Ib,

$$R^1\text{-}A\text{-}(Z\text{-}A)_m\text{-}\overset{\overset{|}{Sp}}{\overset{|}{Z^\circ}}\text{-}(A\text{-}Z)_n\text{-}A\text{-}R^2 \qquad \text{Ia}$$

$$R^1\text{-}(A\text{-}Z)_m\text{-}\overset{\overset{|}{Sp}}{\overset{|}{A^\circ}}\text{-}(Z\text{-}A)_n\text{-}R^2 \qquad \text{Ib}$$

worin

| | |
|---|---|
| $R^1$ und $R^2$ | Alkyl mit 1-15 C-Atomen, worin auch eine oder zwei nicht benachbarte $CH_2$-Gruppen durch -O-, -CO-, -O-CO-, -CO-O- und/oder -CH=CH- ersetzt sein können, einer der Reste $R^1$ und $R^2$ auch H, F, Cl, Br, NCS, $NO_2$, CN, $R^3$-A-Z, |
| $R^3$ | Alkyl mit 1-15 C-Atomen, worin auch eine oder zwei nicht benachbarte $CH_2$-Gruppen durch -O-, -CO-, -O-CO-, -CO-O- und/oder -CH=CH- ersetzt sein können, H, F, Cl, Br, NCS oder CN, |
| Sp | eine kovalente Bindung oder einen Rest der Formel $-Q^1-W^1-Q^2-W^2-$, |
| $Q^1$, $Q^2$ | jeweils unabhängig voneinander eine chemische Bindung und/oder Alkylengruppe mit 1 bis 25 C-Atomen, worin auch eine oder mehrere nicht benachbarte $CH_2$-Gruppen durch -O-, -S- oder -N($C_1$-$C_6$ Alkyl)- ersetzt sein können, |
| $W^1$, $W^2$ | jeweils unabhängig voneinander eine chemische Binding und/oder eine funktionelle Gruppierung aus der Gruppe -O-,-S-, -SO-, -$SO_2$-, -N($C_1$-$C_6$ Alkyl)-, -CO-, -CO-O-, -O-CO-, -O-CO-O-, -CO-S-, -S-CO-, -CO-NH($C_1$-$C_6$ Alkyl)-, -NH($C_1$-$C_6$ Alkyl)-CO, -O-CO-NH($C_1$-$C_6$ Alkyl)- oder -NH($C_1$-$C_6$ Alkyl)-CO-O und $C_1$-$C_6$ Alkyl, |
| A | jeweils eine 1,4-Cyclohexylengruppe, worin auch eine oder zwei nicht benachbarte $CH_2$-Gruppen durch -O- und/oder -S- ersetzt sein können und/oder die in 1-Stellung durch $C_1$-$C_4$ Alkyl, F, Cl, Br, $CF_3$, CN substituiert sein kann, eine Piperidin-1,4-diyl- oder 1,4-Bicyclo[2,2,2]octylengruppe oder eine unsubstituierte oder durch ein oder zwei F- und/oder Cl-Atome und/oder $CH_3$-Gruppen und/oder CN-Gruppen substituierte 1,4-Pheny- |

lengruppe, worin auch eine oder mehrere CH-Gruppen durch N ersetzt sein können,

$A^0$-Sp- einer der Reste der Formel (1) oder (2),

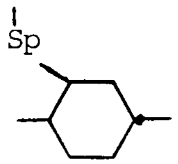 (1) 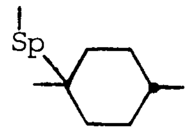 (2)

worin auch eine oder zwei nicht benachbarte $CH_2$-Gruppen durch -O- und/oder -S- ersetzt sein können und/oder eine $CH_2$-CH-Gruppe durch -N = C- oder -CH = C- ersetzt sein kann und/oder die in 1-Stellung durch $C_1$-$C_4$ Alkyl, F, Cl, Br, $CF_3$, CN substituiert sein kann, oder ein Rest der Formel (3),

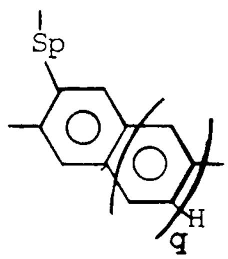 (3)

worin q 0 bis 2 bedeutet und worin auch eine oder mehrere CH-Gruppen durch N ersetzt sein können und/oder der auch durch ein oder zwei F- und/oder Cl-Atome und/oder $CH_3$-Gruppen und/oder CN-Gruppen substituiert sein kann,
oder einer der Reste (4), (5) oder (6)

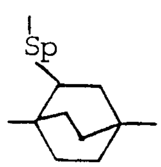 (4) 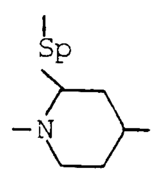 (5) 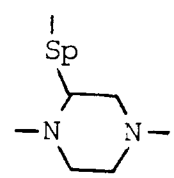 (6),

n und m jeweils 0 bis 3,

Z jeweils -CO-O-, -O-CO-, $-CH_2CH_2-$, $-CHCN-CH_2-$, $-CH_2-CHCN-$, -CH = CH-, $-OCH_2-$, $-CH_2O-$, -CH = N-, -N = CH-, -NO = N-, -N = NO- oder eine Einfachbindung,

$Z^0$-Sp $-CH_2-CHSp-$, $-CSpCN-CH_2-$, -CHCN-CHSp-, -CSp = CH-, -CHSp-O- oder -CSp = N- bedeuten,

mit der Maßgabe, daß m + n 0 bis 3 ist.

Vor- und nachstehend haben $R^1$, $R^2$, $R^3$, A, $A^0$, 1, m, n, Sp, $Q^1$, $Q^2$, $W^1$, $W^2$, Z und $Z^0$ die angegebene Bedeutung, sofern nicht ausdrücklich etwas anders vermerkt ist.

Die Verbindungen der Formel Ia/b umfassen dementsprechend Verbindungen mit zwei Ringen der Teilformeln Iaa bis Iba, wobei (Sp-) einen die angegebene Bedeutung besitzenden und an die voranstehende Ring- oder Brückengruppe gebundenen Spacer bedeutet:

| | |
|---|---|
| $R^1$-$A^0$(Sp-)-Z-A-$R^2$ | Iaa |
| $R^1$-$A^0$(Sp-)-A-$R^2$ | Iab |
| $R^1$-A-$Z^0$(Sp-)-A-$R^2$ | Iba, |

Verbindungen mit drei Ringen der Teilformeln Iac bis Ibg:

| | |
|---|---|
| $R^1$-$A^0$(Sp-)-A-Z-A-$R^2$ | Iac |
| $R^1$-A-$A^0$(Sp-)-Z-A-$R^2$ | Iad |
| $R^1$-A-A-Z-$A^0$(Sp-)-$R^2$ | Iae |
| $R^1$-$A^0$(Sp-)-Z-A-Z-A-$R^2$ | Iaf |
| $R^1$-A-Z-$A^0$(Sp-)-Z-A-$R^2$ | Iag |
| $R^3$-A-Z-$A^0$(Sp-)-Z-A-$R^2$ | Iah |
| $R^3$-A-Z-A-Z-$A^0$(Sp-)-$R^2$ | Iai |
| $R^3$-$A^0$(Sp-)-A-Z-A-$R^2$ | Iaj |
| $R^3$-A-$A^0$(Sp-)-Z-A-$R^2$ | Iak |
| $R^3$-A-A-Z-$A^0$(Sp-)-$R^2$ | Ial |
| $R^1$-$A^0$(Sp-)-A-A-$R^2$ | Iam |
| $R^1$-A-$A^0$(Sp-)-A-$R^2$ | Ian |
| $R^1$-A-A-$Z^0$(Sp-)-A-$R^2$ | Ibc |
| $R^1$-A-$Z^0$(Sp-)-A-Z-$R^2$ | Ibd |
| $R^3$-A-$Z^0$(Sp-)A-Z-A-$R^2$ | Ibe |
| $R^3$-A-Z-A-$Z^0$(Sp-)-A-$R^2$ | Ibf |
| $R^3$-A-A-$Z^0$(Sp-)-A-$R^2$ | Ibg, |

Verbindungen mit vier Ringen der Teilformeln Iao bis Ib

| | |
|---|---|
| $R^3$-$A^0$(Sp-)-Z-A-Z-A-Z-A-$R^3$ | Iao |
| $R^3$-A-Z-$A^0$(Sp-)-Z-A-Z-A-$R^3$ | Iap |
| $R^3$-$A^0$(Sp-)-A-Z-A-A-$R^3$ | Iaq |
| $R^3$-A-$A^0$(Sp-)-Z-A-A-$R^3$ | Iar |
| $R^3$-$A^0$(Sp-)-Z-A-A-A-$R^3$ | Ias |
| $R^3$-A-Z-$A^0$(Sp-)-A-A-$R^3$ | Iat |
| $R^3$-A-Z-A-$A^0$(Sp-)-A-$R^3$ | Iau |
| $R^3$-A-Z-A-A-$A^0$(Sp-)-$R^3$ | Iav |
| $R^1$-$A^0$(Sp-)-A-Z-A-Z-A-$R^3$ | Iaw |
| $R^1$-A-$A^0$(Sp-)-Z-A-Z-A-$R^3$ | Iax |
| $R^1$-A-A-Z-$A^0$(Sp-)-Z-A-$R^3$ | Iay |
| $R^1$-A-A-Z-A-Z-$A^0$(Sp-)-$R^3$ | Iaz |
| $R^3$-$A^0$(Sp-)-Z-A-A-Z-A-$R^2$ | Iaaa |
| $R^3$-A-Z-$A^0$(Sp-)-A-Z-A-$R^2$ | Iaab |
| $R^3$-A-Z-A-$A^0$(Sp-)-Z-A-$R^2$ | Iaac |
| $R^3$-A-Z-A-A-Z-$A^0$(Sp-)-$R^2$ | Iaad |
| $R^1$-$A^0$(Sp-)-A-A-A-$R^3$ | Iaae |
| $R^1$-A-$A^0$(Sp-)-A-A-$R^3$ | Iaaf |
| $R^1$-A-A-$A^0$(Sp-)-A-$R^3$ | Iaag |
| $R^1$-A-A-A-$A^0$(Sp-)-$R^3$ | Iaah |
| $R^1$-$A^0$(Sp-)-A-A-Z-A-$R^3$ | Iaai |
| $R^1$-A-$A^0$(Sp-)-A-Z-A-$R^3$ | Iaaj |
| $R^1$-A-A-$A^0$(Sp-)-Z-A-$R^3$ | Iaak |
| $R^1$-A-A-A-Z-$A^0$(Sp-)-$R^3$ | Iaal |
| $R^1$-$A^0$(Sp-)-A-Z-A-A-$R^3$ | Iaam |
| $R^1$-A-$A^0$(Sp-)-Z-A-A-$R^3$ | Iaan |
| $R^1$-A-A-Z-$A^0$(Sp-)-A-$R^3$ | Iaao |
| $R^1$-A-A-Z-A-$A^0$(Sp-)-R3 | Iaap |
| $R^3$-$A^0$(Sp-)-A-A-Z-A-$R^2$ | Iaaq |
| $R^3$-A-$A^0$(Sp-)-A-Z-A-$R^2$ | Iaar |
| $R^3$-A-A-$A^0$(Sp-)-Z-A-$R^2$ | Iaas |
| $R^3$-A-A-A-Z-$A^0$(Sp-)-$R^2$ | Iaat |
| $R^3$-A-$Z^0$(Sp-)-A-Z-A-Z-A-$R^3$ | Ibh |
| $R^3$-A-Z-A-$Z^0$(Sp-)-A-Z-A-$R^3$ | Ibi |
| $R^3$-A-A-$Z^0$(Sp-)-A-A-$R^3$ | Ibj |
| $R^3$-A-$Z^0$(Sp-)-A-A-A-$R^3$ | Ibk |
| $R^1$-A-A-$Z^0$(Sp-)-A-Z-A-$R^3$ | Ibl |
| $R^1$-A-A-Z-A-$Z^0$(Sp-)-A-$R^3$ | Ibm |
| $R^3$-A-$Z^0$(Sp-)-A-A-Z-A-$R^2$ | Ibn |
| $R^3$-A-Z-A-A-$Z^0$(Sp-)-A-$R^2$ | Ibo |
| $R^1$-A-A-A-$Z^0$(Sp-)-A-$R^3$ | Ibp |
| $R^1$-A-A-$Z^0$(Sp-)-A-A-$R^3$ | Ibq |
| $R^3$-A-A-A-$Z^0$(Sp-)-A-$R^3$ | Ibr, |

sowie Verbindungen mit fünf Ringen der Teilformeln Iaau bis Ib

| | |
|---|---|
| $R^3$-$A^0$(Sp-)-Z-A-A-Z-A-Z-A-$R^3$ | Iaau |
| $R^3$-A-Z-$A^0$(Sp-)-A-Z-A-Z-A-$R^3$ | Iaav |
| $R^3$-A-Z-A-$A^0$(Sp-)-Z-A-Z-A-$R^3$ | Iaaw |
| $R^3$-A-Z-A-A-Z-$A^0$(Sp-)-Z-A-$R^3$ | Iaax |
| $R^3$-A-Z-A-A-Z-A-Z-$A^0$(Sp-)-$R^3$ | Iaay |
| $R^3$-$A^0$(Sp-)-A-A-A-A-$R^3$ | Iaaz |
| $R^3$-A-$A^0$(Sp-)-A-A-A-$R^3$ | Iaba |
| $R^3$-A-A-$A^0$(Sp-)-A-A-$R^3$ | Iabb |
| $R^3$-$A^0$(Sp-)-A-A-Z-A-A-$R^3$ | Iabc |
| $R^3$-A-$A^0$(Sp-)-A-Z-A-A-$R^3$ | Iabd |
| $R^3$-A-A-$A^0$(Sp-)-Z-A-A-$R^3$ | Iabe |
| $R^3$-A-A-A-Z-$A^0$(Sp-)-A-$R^3$ | Iabf |
| $R^3$-A-A-A-Z-A-$A^0$(Sp-)-$R^3$ | Iabg |
| $R^3$-A-$Z^0$(Sp-)-A-A-Z-A-Z-A-$R^3$ | Ibs |
| $R^3$-A-Z-A-A-$Z^0$(Sp-)-A-Z-A-$R^3$ | Ibt |
| $R^3$-A-Z-A-A-Z-A-$Z^0$(Sp-)-A-$R^3$ | Ibu |
| $R^3$-A-A-A-$Z^0$(Sp-)-A-A-$R^3$ | Ibv. |

In den Verbindungen der vor- und nachstehendenen Formeln bedeuten $R^1$, $R^2$ und $R^3$ vorzugsweise Alkyl, ferner Alkoxy.

Weiterhin bevorzugt sind Verbindungen der vor- und nachstehenden Formeln, in denen einer der Reste $R^1$, $R^2$ und $R^3$ CN, F oder SCN bedeutet.

A und $A^0$ sind jeweils unabhängig voneinander bevorzugt 1,4-Cyclohexylen, 1,4-Phenylen, 1,3-Dioxan-2,5-diyl oder Pyridin-2,5-diyl.

Sp bedeutet bevorzugt einen Rest $-Q^1-W^1-Q^2-W^2-$. $Q^1$ und $Q^2$ sind jeweils unabhängig voneinander vorzugsweise Alkylen mit 1 bis 15 C-Atomen. $W^1$ und $W^2$ bedeuten jeweils unabhängig voneinander vorzugsweise -0-, -S-, -0-C0-, -C0-0- oder -C0-NH-. n und m bedeuten jeweils unabhängig voneinander 0 oder 1, insbesondere ist n + m 0 bis 2.

Z bedeutet jeweils unabhängig voneinander vorzugsweise Einfachbindungen, weiterhin bevorzugt -C0-0-, 0-C0- oder $-CH_2CH_2-$Gruppen. $Z^0$-Sp ist bevorzugt $-CH_2-CHSp-$, -CSp=CH- oder CHSp-0-.

$R^1$, $R^2$, $R^3$, A, $A^0$, Sp, $Q^1$, $Q^2$, $W^1$, $W^2$, Z, $Z^0$, m und n können jeweils gleich sein; sie sind vorzugsweise jedoch jeweils voneinander unabhängig und verschieden.

Falls $R^1$, $R^2$ und/oder $R^3$ Alkylreste und/oder Alkoxyreste bedeuten, so können sie geradkettig oder verzweigt sein. Vorzugsweise sind sie geradkettig, haben 2, 3, 4, 5, 6 oder 7 C-Atome und bedeuten demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-0xapropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl.

Falls $R^1$, $R^2$ und/oder $R^3$ Alkylreste bedeuten, in denen eine $CH_2$-Gruppe durch -CH=CH- ersetzt ist, so können diese geradkettig oder verzweigt sein. Vorzugsweise sind sie geradkettig und haben 2 bis 10 C-Atome. Sie bedeuten demnach besonders Vinyl, Prop-1- oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Verbindungen der Formeln I mit verzweigten Flügelgruppen $R^1$, $R^2$ und/oder $R^3$ können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien, für chiral getiltete smektische Phasen und als Komponenten nematischer flüssigkristalliner Phasen, insbesondere zur Vermeidung von reverse twist.

Verzweigte Gruppen dieser Art enthalten in der Regel nicht mehr als eine Kettenverzweigung. Bevorzugte verzweigte Reste $R^1$, $R^2$ und/oder $R^3$ sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Die Formeln Ia und Ib umfassen sowohl die Racemate dieser Verbindungen als auch die optischen Antipoden sowie deren Gemische.

Unter den Verbindungen der Formel Ia/b sowie Iaa bis Ibv sind diejenigen bevorzugt, in denen mindestens einer der darin enthaltenen Reste eine der angegebenen bevorzugten Bedeutungen hat.

Den mesogenen Resten der Formel Ia bzw. Ib entsprechende Verbindungen, worin die den Spacer Sp bindende Valenz durch Wasserstoff oder einen Rest $-Q^1-H$ oder $-W^1-H$ abgesättigt ist, sind bereits als Flüssigkristalle bekannt und beispielsweise beschrieben in den deutschen Patenanmeldungen P 33 15 295, P 33 46 175, P 34 01 320, P 34 01 321, P 24 04 116, P 34 11 571; in den DE-OS 21 67 252, 22 57 588, 24 29 093, 25 47 737, 26 41 724, 29 44 905, 29 51 099, 31 40 868, 32 28 350 und in den EP-0S 0 014 885, 0 084 194, 0 104 011, 0 111 695, 0 122 389, 0 126 883.

Zur lateralen Bindung an Polymere geeignete mesogene Gruppen besitzen vorzugsweise die Grundstrukturen a bis an, in denen Phe 1,4-Phenylen, Cyc trans-1,4-Cyclohexylen, Dio 2,5-Dioxan-1,3-diyl und Pym Pyrimidin-2,5-diyl bedeuten und $R^1$ und $R^2$ die bei Formel Ia/b angegebene Bedeutung besitzen:

| | |
|---|---|
| a | $R^1$-Phe-Phe-$R^2$ |
| b | $R^1$-Phe-Cyc-$R^1$ |
| c | $R^1$-Cyc-Cyc-$R^2$ |
| d | $R^1$-Phe-Phe-Phe-$R^2$ |
| e | $R^1$-Cyc-Phe-Phe-$R^2$ |
| f | $R^1$ Cyc-Phe-Cyc-$R^2$ |
| g | $R^1$-Cyc-Phe-Phe-Cyc-$R^2$ |
| h | $R^1$-Phe-$CH_2CH_2$-Phe-$R^2$ |
| i | $R^1$-Cyc-$CH_2CH_2$-Cyc-$R^2$ |
| j | $R^1$-Phe-Cyc-$CH_2CH_2$-Phe-$R^2$ |
| k | $R^1$-Cyc-$CH_2CH_2$-Phe-Phe-$R^2$ |
| l | $R^1$-Phe-$CH_2CH_2$-Phe-Phe-$R^2$ |
| m | $R^1$-Cyc-CH(CN)-$CH_2$-Cyc-$R^2$ |
| n | $R^1$-Phe-COO-Phe-$R^2$ |
| o | $R^1$-Cyc-COO-Phe-$R^2$ |
| p | $R^1$-Cyc-COO-Phe-Phe-$R^2$ |
| q | $R^1$-Cyc-Phe-COO-Phe-$R^2$ |
| r | $R^1$-Cyc-Phe-OCO-Cyc-$R^2$ |
| s | $R^1$-Phe-Cyc-COO-Phe-$R^2$ |
| t | $R^1$-Phe-Cyc-OCO-Phe-$R^2$ |
| u | $R^1$-Phe-Cyc-COO-Cyc-$R^2$ |
| v | $R^1$-Phe-Phe-COO-Phe-Phe-$R^2$ |
| w | $R^1$-Cyc-COO-Phe-Phe-$R^2$ |
| x | $R^1$-Phe-Phe-COO-Phe-$R^2$ |
| y | $R^1$-Cyc-COO-Phe-COO-Phe-$R^2$ |
| z | $R^1$-Phe-$CH_2O$-Phe-$R^2$ |
| aa | $R^1$-Phe-Phe-$CH_2O$-Phe-$R^2$ |
| ab | $R^1$-Cyc-Phe-$CH_2O$-Phe-$R^2$ |
| ac | $R^1$-Phe-Cyc-$CH_2O$-Phe-$R^2$ |
| ad | $R^1$-Dio-Phe-$R^2$ |
| ae | $R^1$-Dio-Cyc-$R^2$ |
| af | $R^1$-Cyc-Dio-Phe-$R^2$ |
| ag | $R^1$-Dio-Cyc-Phe-$R^2$ |
| ah | $R^1$-Dio-Phe-COO-Phe-$R^2$ |
| ai | $R^1$-Dio-Cyc-COO-Phe-$R^2$ |
| aj | $R^1$-Pym-Phe-$R^2$ |
| ak | $R^1$-Cyc-Pym-Phe-$R^2$ |
| al | $R^1$-Pym-Phe-COO-Phe-$R^2$ |
| am | $R^1$-Pym-Phe-$CH_2O$-Phe-$R^2$ |
| an | $R^1$-Pym-Phe-OCO-Phe-$R^2$ |

Die Bindung zum Spacer Sp kann sowohl zu einer der Ringgruppen Phe, Cyc, Dio oder Pym als auch zu einer Brückengruppe $-CH_2O-$, $-CH_2CH_2-$ oder $-CH(CN)-CH_2-$ erfolgen.

Weiterer Gegenstand der Erfindung ist ein Verfahren zur Herstellung von Polymermaterialien nach Anspruch 1 und 2.

So können Verbindungen der Formel II,

Y-M II

worin M eine mesogene Gruppe der Formel Ia/b und Y eine zur Polymerisation oder Aufpfropfung befähigte funktionelle Gruppe bedeutet, polymerisiert werden, sofern Y eine in ω-oder (ω-1)-Stellung befindliche Alkylengruppe mit 2 bis 5 C-Atomen bedeutet.

Y kann mit dem Spacer Sp direkt ($-Q^1-W^1-Q^2-Y$) oder über eine funktionelle Gruppe ($-Q^1-W^1-Q^2-W^2-Y$) verbunden sein.

Besonders bevorzugte Gruppen sind -0-, -C0-0-, -C0-NH- und -S-, insbesondere -0- und -C0-0.

Die erfindungsgemäßen Polymermaterialien können aus Verbindungen der Formel II, worin Y eine in ω- oder (ω-1)-Stellung befindliche Alkylengruppe mit 2 bis 5 C-Atomen bedeutet, auch durch Copolymerisation mit weiteren olefinisch ungesättigten Monomeren hergestellt werden. Als Comonomere eignen sich beispielsweise $C_1$- bis $C_{20}$-Alkylester der Acryl- und/oder der Methacrylsäure, Styrol, α-Methylstyrol, 4-Methylstyrol, Acrylnitril, Methacrylnitril sowie Methylenmalonester.

Die Polymerisation erfolgt in an sich bekannter Weise durch Einwirkung von Strahlungs-, Wärme- oder elektrischer Energie sowie durch Einwirkung radikalischer oder ionischer Katalysatoren wie z.B. beschrieben in Odian, Principles of Polymerization, McGraw-Hill, New York, 1970. Als Strahlungsenergie eignen sich UV-, Laser-, Roentgen- und radioaktive Strahlen. Elektrische Energie kann beispielsweise durch Elektrolyseverfahren erzeugt werden. Beispiele für radikalische Katalysatoren sind Kaliumpersulfat, Dibenzoylperoxid, Azobisisobutyronitril, Di-tertbutylperoxid und Cyclohexanonperoxid. Ionische Katalysatoren sind alkali-organische Verbindungen wie Phenyllithium und Naphthalinnatrium oder Lewissäuren wie $BF_3$, $AlCl_3$, $SnCl_4$ und $TiCl_4$ oder Metallkomplexe in Form von Aluminium- oder Titanverbindungen. Die Monomeren können in Lösung, Suspension, Emulsion oder Substanz polymerisiert werden.

Sofern Y eine Hydroxy-, Amino-, Mercapto-, Epoxid- oder Carboxygruppe oder einen ihrer reaktionsfähigen Abkömmlinge bedeutet, können die Verbindungen der Formel II auf ein polymeres Rückgrat aufgepfropft werden. Besonders bevorzugt bedeutet Y hierbei 0H, $NH_2$, C00H oder einen reaktionsfähigen Abkömmling, insbesondere 0H oder einen reaktionsfähigen Abkömmling der Carboxylgruppe. Diese Aufpfropfungsreaktion kann nach an sich bekannten Methoden, wie z.B. Veresterung, Amidierung, Umesterung, Umamidierung, Acetalisierung oder Veretherung erfolgen, die in der Literatur beschrieben sind [z.B. in Standardwerken wie Houben-Weyl, Methoden der Org.Chemie, Georg-Thieme-Verlag, Stuttgart oder C.M. Paleos et al., J.Polym. Sci.Polym.Chem. 19 (1981) 1427].

Eine bevorzugte Aufpfropfungsreaktion besteht in der Umsetzung mesogene Gruppen der Formel I a/b tragender Monomerer mit Organopolysiloxanen. Hierzu werden, wie z.B. in EP-PS 0060335 beschrieben, lineare oder cyclische Organowasserstoffpolysiloxane mit ethylenisch ungesättigten, mesogenen Monomeren der Formel II (Y bedeutet eine in ω- oder (ω-1)-Stellung befindliche Alkenylgruppe mit 2 bis 5 C-Atomen) in etwa äquimolaren Mengen, bezogen auf die Menge Siloxan-Wasserstoff, in Gegenwart eines die Addition von Silan-Wasserstoff an aliphatische Mehrfachbindungen fördernden Katalysators umgesetzt.

Als polymeres Rückgrat kommen prinzipiell alle Polymeren in Frage, deren Ketten eine gewisse Flexibilität aufweisen. Es kann sich hierbei um lineare, verzweigte oder cyclische Polymerketten handeln. Der Polymerisationsgrad beträgt normalerweise mindestens 10, vorzugsweise 20-100. Es kommen jedoch auch Oligomere, insbesondere cyclische Oligomere, mit 3 bis 15, insbesondere mit 4 bis 7 Monomereinheiten, in Frage.

Vorzugsweise werden Polymere mit C-C-Hauptketten, insbesondere Polyacrylate, -methacrylate, -α-halogenacrylate, -α-cyanacrylate, -acrylamide, -acrylnitrile oder -methylenmalonate eingesetzt. Weiterhin bevorzugt sind auch Polymere mit Heteroatomen in deren Hauptkette, beispielsweise Polyether, -ester, -amide, -imide oder -urethane oder insbesondere Polysiloxane.

Insbesondere eignen sich als polymeres Rückgrat auch flüssigkristalline Hauptkettenpolymere wie sie beispielsweise bei R.W. Lenz in L.L. Chapoy (Hrsg.), Recent Advances in Liquid Crystalline Polymers, London + New York, 1985, S. 3, beschrieben sind.

Entsprechend terminal funktionalisierte Verbindungen der Formel II können nach an sich bekannten Methoden hergestellt werden, wie sie in der Literatur (z. B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Bevorzugte Ausgangsmaterialien sind Verbindungen der Formel III a/b,

$$R^1-A-(Z-A)_m-\overset{X^{1,2}}{\overset{|}{Z^\circ}}-(A-Z)_n-R^2 \qquad \text{IIIa}$$

$$R^1-(A-Z)_m-\overset{X^{1,2}}{\overset{|}{A^\circ}}-(Z-A)_n-R^2 \qquad \text{IIIb}$$

worin A, $A^0$, $R^1$, $R^2$, Z, $Z^0$, m und n die für Formel Ia/b angegebene Bedeutung besitzen und

- $X^1$ eine Carboxygruppe oder einen ihrer reaktiven Abkömmlinge, eine Epoxid-, Halogen-, Halogenalkyl-, Sulfonat- oder Isocyanatgruppe,
- $X^2$ eine Amino-, Alkohol- oder Thiolgruppe oder ein Halogenatom

bedeuten.

Zur Herstellung von Verbindungen der Formel Ia/b können Verbindungen der Formel IIIa/b enthaltend eine funktionelle Gruppe $X^1$ mit als Spacern geeigneten, eine funktionelle Gruppe $X^2$ enthaltenden Verbindung verestert, verethert, amidiert oder übergangsmetallkatalysiert gekuppelt werden. Gleichermaßen geeignet ist die entsprechende Umsetzung von funktionelle Gruppen $X^2$ enthaltenden Verbindungen der Formel IIIa/b mit als Spacern geeigneten, funktionelle Gruppen $X^1$ enthaltenden Verbindungen.

Weiterhin bevorzugt zur Herstellung von Verbindungen der Formel Ia/b sind Verbindungen der Formeln IV und/oder V,

$$R^1-(A-Z)_m-\overset{Sp-H}{\overset{|}{A^\circ}}-X^{1,2} \qquad \text{IV} \qquad\qquad X^{2,1}-A-(Z-A)_n-R^2 \qquad \text{V,}$$

worin A, $A^0$, $R^1$, $R^2$, Sp, Z, $Z^0$, m und n die für die Formel Ia/b, $X^1$ und $X^2$ die für Formel IIIa/b angegebene Bedeutung besitzen.

Verbindungen der Formel IV enthaltend eine funktionelle Gruppe $X^1$ können mit Verbindungen der Formel V enthaltend eine funktionelle Gruppe der Formel $X^2$ verestert, verethert, amidiert oder übergangsmetallkatalysiert gekuppelt werden. Gleichermaßen geeignet ist die entsprechende Umsetzung von funktionellen Gruppen $X^2$ enthaltenden Verbindungen der Formel IV mit funktionelle Gruppen $X^1$ enthaltenden Verbindungen der Formel V.

Ebenfalls bevorzugt zur Herstellung von Verbindungen der Formel Ia/b sind Verbindungen der Formeln VI und/oder VII,

$$R^1-(A-Z)_m-A-\overset{Sp-H}{\overset{|}{C}}H-OH \qquad \text{VI} \qquad R^1-(A-Z)_m-A-\overset{OH}{\overset{|}{C}}H-CH_2-(A-Z)_n-R^2 \qquad \text{VII,}$$

worin A, $R^1$, $R^2$, Sp, Z, m und n die für Formel Ia/b angegebene Bedeutung besitzen.

Alkohole der Formel VI können mit Verbindungen der Formel V enthaltend eine funktionelle Gruppe $X^1$ mit der für Formel IIIa/b angegebenen Bedeutung zu polymerisationsfähigen, zur Darstellung der erfindungsgemäßen Polymermaterialien geeigneten Verbindungen der Formel II umgesetzt werden.

Alkohole der Formel VII können mit als Spacern geeigneten, funktionelle Gruppen $X^1$ enthaltenden Verbindungen zu Präpolymeren der Formel II umgesetzt werden.

Die zur Herstellung von zu erfindungsgemäßen Materialien der Formel Ia/b polymerisierbaren Zwischenprodukten geeigneten Verbindungen der Formeln IIIa/b, IV, V, VI und VII sind teilweise bekannt, größtenteils jedoch neu. Ihre Herstellung erfolgt nach an sich bekannten Methoden, wie sie in der Literatur (z. B. in Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Sie dienen zur Herstellung der erfindungsgemäßen flüssigkristallinen Polymermaterialien.

Die bei der Herstellung von IIIa/b bis VII angegebenen Verfahren sind an sich bekannt (z. B. aus Standardwerken wie Houben-Weyl, Methoden der Org. Chemie, Georg-Thieme-Verlag, Stuttgart). Normalerweise werden die für die genannten Umsetzungen bekannten Reaktionsbedingungen eingehalten. Man kann jedoch auch von an sich bekannten, hier nicht näher erwähnten Varianten Gebrauch machen. Insbesondere kann man sich der für die Herstellung der nicht mit einer polymerisierbaren Seitenkette versehenen, mit den Formeln a bis an beschriebenen Grundkörper angegebenen Verfahren bedienen.

Die niedermolekularen Verbindungen der Formel II weisen teilweise breite Mesophasenbereiche auf. Verbindungen der Formel II, die keine Mesophasen aufweisen, sind jedoch auch zur Herstellung der erfindungsgemäßen Polymermaterialien geeignet.

Die Herstellung von Homo- oder Copolymeren aus den polymerisationsfähigen Verbindungen der Formel II oder deren polymerisationsfähigen Derivaten erfolgt vorzugsweise durch radikalische Polymerisation. Die Reaktion wird beispielsweise durch UV-Bestrahlung oder Radikalbildner gestartet. Die Monomeren können in Lösung oder in Substanz polymerisiert werden.

Erfindungsgemäße flüssigkristalline Phasen aufweisende Copolymermaterialien werden durch Copolymerisation von polymerisationsfähigen Verbindungen der Formel II oder deren polymerisationsfähigen Derivaten mit Monomeren erhalten, die keine mesogenen Reste tragen, die andere mesogene Reste (z. B. disk-like: DE-PS 34 30 482) tragen, die chirale Reste (z. B. DE-OS 28 31 909) tragen oder die Farbstoffreste (DE-OS 32 11 400) tragen.

Die Copolymerisation mit solchen Monomeren führt, ausgehend von einer Monomerenmischung mit der Konzentration $X_1$, nur dann zu einem Copolymerisat mit dem Einbauverhältnis entsprechend der Monomerkonzentration $X_1$, wenn die Copolymerisationsparameter der Monomerkomponenten von vergleichbarer Größenordnung sind. Das ist besonders dann von Bedeutung, wenn problemlos, z. B. ohne Berücksichtigung der Reaktionskinetik, ein Copolymer bestimmter Zusammensetzung hergestellt werden soll. Deshalb wählt man vorzugsweise Monomerkomponenten, die vergleichbare Copolymerisationsparameter aufweisen, etwa Acrylsäure- oder Methacrylsäurealkylester, die sich in erster Linie durch den Substituenten der Alkylkette unterscheiden.

Die Copolymerisation mit Monomeren, die keinen mesogenen Rest tragen, führt im allgemeinen zu einer Erniedrigung der Glastemperatur und des Klärpunktes. Durch geeignete Auswahl des Spacers ist es oftmals möglich, den Mesophasenbereich in den für den jeweiligen Anwendungszweck geeigneten Temperaturbereich zu bringen.

Als Monomere mit chiralem Rest können prinzipiell alle derartigen Verbindungen mit asymmetrischen C-Atomen verwendet werden. Vorzugsweise werden jedoch Verbindungen der Formel II oder deren polymerisationfähige Derivate eingesetzt, in denen M eine mesogene Gruppe der Formel Ia oder Ib bedeutet, worin einer der Reste $R^1$, $R^2$ und/oder $R^3$ eine Alkylgruppe bedeutet, worin eine $CH_2$-Gruppe durch $-CHCH_3-$ ersetzt ist.

Schließlich ergeben sich zahlreiche weitere Variationsmöglichkeiten wegen des Umstandes, daß die erfindungsgemäßen Verbindungen flüssigkristalline Eigenschaften mit typischen Polymereigenschaften, wie Fähigkeit zur Schicht-, Folien- und Faserbildung, leichte Verformbarkeit usw., vereinigen. Diese Eigenschaften können in an sich bekannter Weise durch Copolymerisation oder Vermischen mit weiteren Komponenten, durch Variation der Molekulargewichte, durch Zusätze der verschiedensten anorganischen oder organischen Additive und Metalle und durch viele weitere, dem Polymerfachmann geläufige Behandlungen modifiziert werden.

Die erfindungsgemäßen Polymermaterialien lassen sich als Ausgangsmaterial zur Herstellung von organischen Gläsern mit in breiten Bereichen modifizierbaren anisotropen Eigenschaften verwenden.

Derartige Anwendungen ergeben sich beispielsweise auf dem Sektor von Licht- und Sonnenkollektoren oder bei organischen phototropen Gläsern. Ein wichtiges Anwendungsfeld eröffnet sich ferner auf dem Gebiet der optischen Speicher.

Weitere Anwendungsmöglichkeiten erschließen sich auf dem Gebiet der magnetischen Speicher. Insbesondere eignen sich die erfindungsgemäßen Materialien auch als Matrix für Substanzen mit nicht linear optischen Eigenschaften zur Herstellung von "non linear"-optischen Bauelementen.

Die erfindungsgemäßen Polymermaterialien sind weiterhin zur Amplituden- und/oder Frequenzmodulation von Laserstrahlen geeignet.

Zur Erläuterung der Erfindung dienen folgende Beispiele, wobei G = Glaszustand, K = kristallin, N = nematisch, I = isotrop (Phasenübergangstemperaturen jeweils in Kelvin):

Beispiel 1

a) Aus 2-(10-Carboxydecyl)-hydrochinon (hergestellt aus p-Benzochinon und Undec-10-ensäuremethylester mittels Diboran und anschließender Verseifung) durch Reduktion mit Lithiumaluminiumhydrid erhaltenes 2-(11-Hydroxyundecyl)-hydrochinon wird mit Methacrylsäure zu 1-(11-Methacryloyloxyundecyl)-hydrochinon verestert.

34,8 g der vorstehenden Verbindung werden in 500 ml Dichlormethan gelöst. Nach Zusatz von 20 g Triethylamin versetzt man bei 0° langsam mit 34,1 g 4-Methoxybenzoylchlorid. Nach beendeter Zugabe wird 1 Std. bei Raumtemperatur nachgerührt, anschließend mit Wasser gewaschen und unter vermindertem Druck vom Lösungsmittel befreit. Man erhält 2-(11-Methacryloyloxyundecyl)-hydrochinon-bis(4-methoxyphenyl)-ester. Das Monomere weist im unterkühlten Zustand eine metastabile monotrope nematische Phase auf: K (336) N 296 I.

b) Gemäß Beispiel 1a erhaltener 2-(11-Methacryloyloxyundecyl)-hydrochinon-bis(4-methoxyphenyl)-ester wird in ca. 1 molarer benzolischer Lösung in Anwesenheit von 1 Mol% Azobisisobutyronitril bei 60° polymerisiert. Das erhaltene Polymere zeigt eine stabile flüssigkristalline Phase: G 312 N 337 I.

Beispiel 2

a) Analog zu der in Beispiel 1a beschriebenen Arbeitsweise wird 2-(11-Methacryloyloxyundecyl)-hydrochinon mit 4-Hexyloxybenzoylchlorid verestert.

Der erhaltene 2-(11-Methacryloyloxyundecyl)-hydrochinon-bis(4-hexyloxyphenyl)-ester weist im unterkühlten Zustand eine monotrope metastabile nematische Phase auf: K (322) N 319 I.

b) Der in Beispiel 2a erhaltene 2-(11-Methacryloyloxyundecyl)-hydrochinon-bis(4-hexyloxyphenyl)-ester wird analog zu der in Beispiel 2 beschriebenen Arbeitsweise in benzolischer Lösung polymerisiert. Man erhält ein Polymeres, das eine stabile flüssigkristalline Phase aufweist: G 282 N 335 I.

Beispiel 3

a) Aus 4-Heptylphenol, Sebacinsäureanhydrid und Aluminiumchlorid nach bekannten Verfahren erhaltenes 2-(9-Carboxynonanoyl)-4-butylphenol wird mittels Lithiumaluminiumhydrid/Aluminiumchlorid zu 2-(10-Hydroxydecyl)-4-heptylphenol reduziert.

b) Nach Beispiel 3a hergestelltes 2-(10-Hydroxydecyl)-4-heptylphenol (0,1 Mol) wird mit Methacryloylchlorid (0,1 Mol) in 300 ml Pyridin bei 5° zu 2-(10-Methacryloyloxydecyl)-4-heptylphenol umgesetzt.

c) 0,1 Mol des vorstehend erhaltenen Phenols 3b in 250 ml Dichlormethan und 0,1 Mol Triethylamin werden bei 0-5 °C mit 0,1 Mol 4-Propyloxybenzoylchlorid behandelt. Nach 2 Std. Rühren bei dieser Temperatur wäscht man mit Eiswasser neutral, trocknet über Natriumsulfat und dampft ein. Zurück bleibt 4-Propyloxybenzoesäure-(2-(10-methacryloyloxydecyl)-4-heptylphenyl)-ester als Oel.

d) Die Lösung von 0,05 Mol 4-Propyloxybenzoesäure-(2-(10-methacryloyloxydecyl)-4-heptylphenyl)-ester in 100 ml Toluol wird nach Zusatz von 0,5 g Azobis(isobutyronitril) 10 Std. auf 90° erwärmt. Beim Abkühlen scheidet sich das Polymere als Gel aus. Nach Zugabe von Ethanol wird ein filtrierbares amorphes Produkt erhalten, das eine nematische flüssigkristalline Phase besitzt.

Beispiel 4

a) Nach 3b erhaltenes 2-(10-Methacryloyloxydecyl)-4-heptylphenol (0,2 Mol) wird in 500 ml Dichlormethan und 0,1 Mol Triethylamin gelöst. Bei +5° tropft man 0,1 Mol trans-4-Propylcyclohexancarbonsäurechlorid zu, hält noch 30 Min. bei dieser Temperatur und rührt anschließend 1 Std. bei Raumtemperatur. Es wird mit Wasser neutral gewaschen, getrocknet und unter vermindertem Druck schonend vom Lösungsmittel befreit. Es bleibt öliger 4-Propylcyclohexancarbonsäure-(2-(10-methacryloyloxydecyl)-4-heptylphenyl)-ester zurück.

b) Das Gemisch aus 0,1 Mol 4-Propylcyclohexancarbonsäure-(2-(10-methacryloyloxydecyl)-4-heptylphenyl)-ester, 0,005 Mol Azobis(isobutyronitril) und 400 ml Benzol wird 8 Std. unter Rückfluß erhitzt. Noch heiß wird anschließend das Polymere durch Einrühren in 1 Ltr. Methanol ausgefällt. Es zeigt flüssigkristalline Eigenschaften.

Beispiel 5

a) 27,7 g 2-(3-Cyan-4-fluorphenyl)-5-pentyl-1,3-dioxan (erhältlich aus 3-Cyan-4-fluorbenzaldehyd und 2-Pentyl-1,3-propan-diol) in 380 ml Dioxan werden innert 2 Std. zu der siedenden Suspension von 4,0 g Lithiumaluminiumhydrid in 300 ml des gleichen Lösungsmittels zugetropft. Nach beendeter Zugabe erhitzt man noch 1 Std. weiter und zersetzt anschließend mit Wasser. Es wird vom Hydroxidniederschlag abfiltriert und unter vermindertem Druck eingedampft. Man erhält 2-(3-Aminomethyl-4-fluorphenyl)-5-pentyl-1,3-dioxan.

b) Ein Gemisch aus 14,0 g 2-(3-Aminomethyl-4-fluorphenyl)-5-pentyl-1,3-dioxan und 11,7 g Azelainsäuremonoethylesterchlorid in 250 ml Pyridin wird 3 Std. bei Raumtemperatur gerührt. Anschließend gießt man auf 2 Ltr. Eiswasser und saugt das ausgefallene 2-(3-(8-Ethoxycarbonyloctanoylamidomethyl)-4-fluorphenyl)-5-pentyl-1,3-dioxan ab.

c) 0,1 Mol des obigen Amidoesters 5b werden portionsweise in die siedende Suspension von 7,5 g Lithiumaluminiumhydrid in 400 ml Tetrahydrofuran eingetragen. Einstündiges Nacherhitzen, Zersetzen mit Wasser und Aufarbeitung wie in 5a) beschrieben liefert 2-(3-(9-Hydroxynonylaminomethyl)-4-fluorphenyl)-5-pentyl-1,3-dioxan.

d) 15 g eines freie Carboxylgruppen enthaltenden Acrylsäure-Acrylat-Polymeren werden mit 10 g Thionylchlorid in üblicher Weise in das Säurechlorid überführt. Man suspendiert den nach Entfernen überschüssigen Thionylchlorids erhaltenen Rückstand in Pyridin und rührt mit 5 g 2-(3-(9-Hydroxynonylaminomethyl)-4-fluorphenyl)-5-pentyl-1,3-dioxan über Nacht. Filtration und Waschen mit Wasser liefert ein Polymermaterial, das flüssigkristalline Eigenschaften zeigt.

Beispiel 6

a) 15 g trans-4-(4-(4-Pentylcyclohexyl)-phenyl)-ethylbenzol in 50 ml Eisessig werden bei -35° langsam zu dem Gemisch aus 50 g rauchender Salpetersäure und 50 g Essigsäureanhydrid getropft. Man rührt bei dieser Temperatur noch 2 Std. nach, gießt anschließend auf 1 Ltr. Eiswasser, filtriert den hellgelben Niederschlag und trocknet das so erhaltene Gemische der Mononitro-4-(4-(4-pentylcyclohexyl)-phenyl-ethylbenzole.

b) Vorstehend erhaltene Nitroverbindung wird in üblicher Weise in ethanolischer Lösung an Palladium/Aktivkohle hydriert.

0,1 Mol derart hergestellten Amino-4-(4-(4-pentylcyclohexyl)-phenyl)-ethylbenzols werden mit 0,1 Mol Brassylsäuredimethylester in 300 ml Toluol unter destillativer Entfernung des gebildeten Methanols 6 Std. auf 90-95° erhitzt. Nach beendeter Umsetzung befreit man unter vermindertem Druck vom Lösungsmittel. Es wird (12-Methoxycarbonyldodecanoylamino)-4-(4-(4-pentylcyclohexyl)-phenyl)-ethylbenzol erhalten. c) 0,25 Mol des Amidesters 6b werden mit 0,5 Mol $LiAlH_4$ wie in Beispiel 5c beschrieben zu (13-Hydroxydodecylamino)-4-(4-(4-pentylcyclohexyl)-phenyl)-ethylbenzol reduziert und anschließend in der unter 5d beschriebenen Weise auf Carboxylgruppen enthaltendes Copolymere aufgepfropft. Man erhält ein eine flüssigkristalline Phase aufweisendes Polymermaterial.

Beispiel 7

a) 21,0 g 5-Butoxysalicylsäure, 22,2 g 5-Heptylpyrimidin-2-carbonsäurechlorid und 20,0 g Triethylamin werden in 500 ml Dichlormethan bei +5° innert 2 Std. miteinander verestert.

b) Nach 7a erhaltener 5-Heptylpyrimidin-2-carbonsäure-(2-carboxy-4-butoxyphenyl)-ester (0,1 Mol) wird mit 15,0 g Thionylchlorid in üblicher Weise in das Säurechlorid überführt. Das nach destillativer Entfernung überschüssigen Thionylchlorids anfallende Rohprodukt wird in 450 ml Dichlormethan aufgenommen und nach Zugabe von 20,0 g Triethylamin langsam mit der Lösung von 0,1 Mol Acrylsäure-(2-(2-(2-Hydroxyethoxy)-ethoxy)-ethyl)-ester versetzt. Nach einstündigem Rühren bei Raumtemperatur wäscht man mit Wasser, trocknet über Natriumsulfat und befreit unter vermindertem Druck vom Lösungsmittel. Man erhält 5-Heptylpyrimidin-2-carbonsäure-(2-(2-(2-(2-acryloyloxyethoxy)-ethoxy)-ethoxycarbonyl)-4-butoxyphenyl)-ester.

c) 0,1 Mol des acrylierten Esters 7b werden in 120 ml Benzol nach Zusatz von 2,5 g Azobis-(isobutyronitril) 6 h unter Rückfluß erhitzt. Nach Abkühlung versetzt man mit dem gleichen Volumen an Methanol. Durch Filtration isoliert man ein Polymeres, das eine flüssigkristalline Phase aufweist.

Beispiel 8

a) Das aus 4-Propylcyclohexancarboxaldehyd und 4′-Triphenylphosphonio-4-pentylbiphenyl-bromid nach Wittig erhältliche 1-(4′-Pentylbiphenyl-4-yl)-2-(4-propylcyclohexyl)-ethen wird in üblicher Weise mit Diboran hydroboriert und mit alkalischem Wasserstoffperoxid in das 1-(4-Propylcyclohexyl)-2-(4′-pentylbiphenyl-4-yl)-ethanol überführt.

b) 0,1 Mol 1-(4-Propylcyclohexyl)-2-(4′-pentylbiphenyl-4-yl)-ethanol werden mit 0,1 Mol Natriumhydrid in 350 ml Toluol bei Raumtemperatur bis zur Beendigung der Wasserstoffentwicklung gerührt. Anschließend fügt man 0,1 Mol 9-Brompelargonsäureallylester (erhalten aus Allylbromid und 9-Brompelargonsäure in DMF mittels Kaliumcarbonat) zu und hält 3 Std. bei 60°. Nach Abkühlen wird mit Wasser

gewaschen, über Natriumsulfat getrocknet und unter vermindertem Druck das Lösungsmittel entfernt, worauf 9-(1-(4-Propylcyclohexyl)-2-(4′-pentylbiphenyl-4-yl)-ethoxy)-pelargonsäureallylester erhalten wird.
c) 10 g des Allylesters 8b werden in 200 ml Xylol unter Zusatz von 200 mg Azobis(isobutyronitril) 3 Std. bei 90° gehalten. Das beim Abkühlen anfallende Polymere wird durch Filtration isoliert. Es zeigt oberhalb des Glaszustandes flüssigkristalline Eigenschaften.

Beispiel 9

a) Man erhitzt ein Gemisch aus 0,1 Mol 4-Heptylbenzol, 0,1 Mol Sebacinsäureanhydrid und 0,2 Mol Aluminiumchlorid in 400 ml Schwefelkohlenstoff 4 Std. unter Rückfluß. Durch Zugabe von 200 ml 10 %iger Salzsäure wird das Reaktionsgemisch hydrolysiert. Ein nach Abtrennen der organischen Phase und destillativer Entfernung des Lösungsmittels erhaltener Rückstand stellt 4-Sebacinoyl-heptylbenzol dar.
b) 0,1 Mol 4-Sebacinoyl-heptylbenzol, 0,1 Mol Natriumborhydrid und 300 ml Methanol werden 5 Std. bei 0 bis +5° gerührt. Anschließend dampft man unter vermindertem Druck zur Trockne ein, nimmt in Wasser auf und fällt das Produkt, 10-(4-Heptylphenyl)-10-hydroxydecansäure, durch Zugabe verdünnter Salzsäure aus.
c) Aus 0,2 Mol der voranstehend beschriebenen Säure 9b wird in üblicher Weise durch Erhitzen in Methanol unter Schwefelsäurezusatz der entsprechende Methylester bereitet.
63,2 g 10-(4-Heptylphenyl)-10-hydroxy-decansäuremethylester werden mit 10 g einer 50 %igen Natriumhydrid/Paraffinoel-Dispersion in 500 ml Dimethylsulfoxid in das Natriumalkoholat überführt. Nach Ende der Wasserstoffentwicklung tropft man bei 20° die Lösung von 69,6 g 4-(4-Mesyloxycyclohexyl)-butylcyclohexan (hergestellt aus dem entsprechenden Cyclohexanol mit Mesylchlorid/Triethylamin in Dichlormethan) in 120 ml Dimethylsulfoxid zu. Es wird 2 Stunden bei 50° weitergerührt, auf 2 Ltr. Eiswasser gegossen und mit Dichlormethan extrahiert. Den nach Entfernen des Lösungsmittels erhaltenen Rückstand chromatographiert man an Kieselgel mit Chloroform als Elutionsmittel. Man isoliert 10-(4-(4-Butylcyclohexyl)-cyclohexyloxy)-10-(4-heptylphenyl)-decansäuremethylester.
d) 0,1 Mol in 9c erhaltenen Decansäureester verseift man durch vierstündiges Kochen in einem Gemisch aus 300 ml Methanol, 100 ml Wasser und 25 g Kaliumhydroxid. Das erhaltene Reaktionsgemisch wird durch Zugabe halbkonzentrierter Salzsäure angesäuert. Man filtriert den Niederschlag und trocknet bei erhöhter Temperatur. Zur Überführung in das Säurechlorid wird die vorstehend hergestellte Rohsäure in der gleichen Gewichtsmenge Thionylchlorid 3 Std. zum Rückfluß erhitzt. Man entfernt flüchtige Komponenten unter vermindertem Druck und isoliert so 10-(4-(4-Butylcyclohexyl)-cyclohexyloxy)-10-(4-heptylphenyl)-decansäurechlorid.
e) 15 g eines hydroxylierten Polyacrylats und 5 g Säurechlorid 9d werden in 200 ml Pyridin nach Zusatz von 1 g 4-Dimethylaminopyridin 24 Std. bei Raumtemperatur gerührt.
Man filtriert, wäscht den Rückstand mit Wasser und trocknet. Das so hergestellte Polymere weist eine flüssigkristalline Phase auf.

## Patentansprüche

1. Flüssigkristalline Phasen aufweisende Polymermaterialien, deren mesogene Gruppen lateral zur Moleküllängsachse über eine Ring- oder Brückengruppe der mesogenen Einheit an das Polymerrückgrat gebunden sind.

2. Flüssigkristalline Phasen aufweisende Polymermaterialien nach Anspruch 1, dadurch gekennzeichnet, daß die mesogenen Gruppen der Formel Ia und/oder Ib entsprechen,

$$R^1-A-(Z-A)_m-\overset{\begin{array}{c}|\\ Sp\\ |\end{array}}{Z^\circ}-(A-Z)_n-A-R^2 \qquad Ia$$

$$R^1-(A-Z)_m-\overset{\begin{array}{c}|\\ Sp\\ |\end{array}}{A^\circ}-(Z-A)_n-R^2 \qquad Ib$$

worin

$R^1$ und $R^2$ Alkyl mit 1-15 C-Atomen, worin auch eine oder zwei nicht benachbarte $CH_2$-Gruppen durch -O-, -CO-, -O-CO-, -CO-O- und/oder -CH=CH- ersetzt sein können, einer der Reste $R^1$ und $R^2$ auch H, F, Cl, Br, NCS, $NO_2$, CN, $R^3$-A-Z,

$R^3$ Alkyl mit 1-15 C-Atomen, worin auch eine oder zwei nicht benachbarte $CH_2$-Gruppen durch -O-, -CO-, -O-CO-, -CO-O- und/oder -CH=CH- ersetzt sein können, H, F, Cl, Br, NCS oder CN,

Sp eine kovalente Bindung oder einen Rest der Formel $-Q^1-W^1-Q^2-W^2-$,

$Q^1$, $Q^2$ jeweils unabhängig voneinander eine chemische Bindung und/oder Alkylengruppe mit 1 bis 25 C-Atomen, worin auch eine oder mehrere nicht benachbarte $CH_2$-Gruppen durch -O-, -S- oder -N($C_1$-$C_6$ Alkyl)- ersetzt sein können,

$W^1$, $W^2$ jeweils unabhängig voneinander eine chemische Bindung und/oder eine funktionelle Gruppierung aus der Gruppe -O-, -S-, -SO-, $-SO_2-$, -N($C_1$-$C_6$ Alkyl)-, -CO-, -CO-O-, -O-CO-, -O-CO-O-, -CO-S-, -S-CO-, -CO-NH($C_1$-$C_6$ Alkyl)-, -NH($C_1$-$C_6$ Alkyl)-CO, -O-CO-NH($C_1$-$C_6$ Alkyl)- oder -NH($C_1$-$C_6$ Alkyl)-CO-O und $C_1$-$C_6$ Alkyl,

A jeweils eine 1,4-Cyclohexylengruppe, worin auch eine oder zwei nicht benachbarte $CH_2$-Gruppen durch -O- und/oder -S- ersetzt sein können und/oder die in 1-Stellung durch $C_1$-$C_4$ Alkyl, F, Cl, Br, $CF_3$, CN substituiert sein kann, eine Piperidin-1,4-diyl- oder 1,4-Bicyclo[2,2,2]octylengruppe oder eine unsubstituierte oder durch ein oder zwei F- und/oder Cl-Atome und/oder $CH_3$-Gruppen und/oder CN-Gruppen substituierte 1,4-Phenylengruppe, worin auch eine oder mehrere CH-Gruppen durch N ersetzt sein können,

$A^0$-Sp- einer der Reste der Formel (1) oder (2),

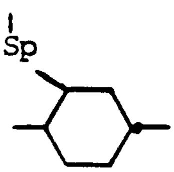 (1) 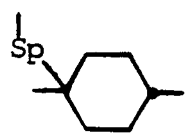 (2)

worin auch eine oder zwei nicht benachbarte $CH_2$-Gruppen durch -O- und/oder -S- ersetzt sein können und/oder eine $-CH_2$-CH-Gruppe durch -N=C- oder -CH=C- ersetzt sein kann und/oder die in 1-Stellung durch $C_1$-$C_4$ Alkyl, F, Cl, Br, $CF_3$, CN substituiert sein kann, oder ein Rest der Formel (3),

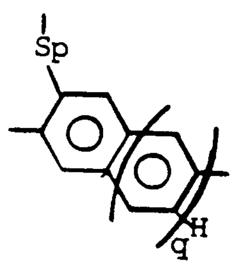

(3)

worin q 0 bis 2 bedeutet und worin auch eine oder mehrere CH-Gruppen durch N ersetzt sein können und/oder der auch durch ein oder zwei F- und/oder Cl-Atome und/oder $CH_3$-Gruppen und/oder CN-Gruppen substituiert sein kann,
oder einer der Reste (4), (5) oder (6)

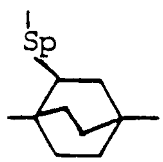 (4) 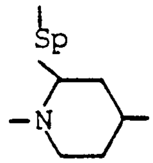 (5) 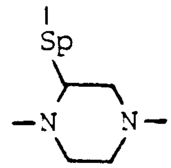 (6),

| | |
|---|---|
| n und m | jeweils 0 bis 3, |
| Z | jeweils -CO-O-, -O-CO-, $-CH_2CH_2-$, $-CHCN-CH_2-$, $-CH_2-CHCN-$, -CH = CH-, $-OCH_2-$, $-CH_2O-$, -CH = N-, -N = CH-, -NO = N-, -N = NO- oder eine Einfachbindung, |
| $Z^0$-Sp | $-CH_2-CHSp-$, $-CSpCN-CH_2-$, -CHCN-CHSp-, -CSp = CH-, -CHSp-O- oder -CSp = N- bedeuten, |

mit der Maßgabe, daß m + n 0 bis 3 ist.

**3.** Verfahren zur Herstellung von Polymermaterialien nach Anspruch 1 und 2, dadurch gekennzeichnet, daß man Verbindungen der Formel II,

Y-M II

worin M eine mesogene Gruppe der Formel Ia/b und Y eine zur Polymerisation oder Aufpfropfung befähigte funktionelle Gruppe bedeutet, polymerisiert,
sofern Y eine in ω- oder (ω-1)-Stellung befindliche Alkylengruppe mit 2 bis 5 C-Atomen bedeutet,
oder auf Polymere aufpfropft,
sofern Y eine Hydroxyl-, Amino-, Mercapto-, Epoxid- oder Carboxygruppe oder einen ihrer reaktionsfähigen Abkömmlinge bedeutet.

**4.** Verwendung von Polymermaterialien nach Anspruch 1 und 2 als organische Substrate in der Elektronik für die Faser- und Folientechnik.

**5.** Verwendung von Polymermaterialien nach Anspruch 1 und 2 zur Amplituden- und/oder Frequenzmodulation von Laserstrahlen.

**6.** Verwendung von Polymermaterialien nach Anspruch 1 und 2 zur optischen Datenspeicherung.

## Claims

**1.** Polymer materials which have liquid-crystalline phases and the mesogenic groups of which are bonded to the polymer backbone laterally to the longitudinal axis of the molecule via a ring group or bridging group of the mesogenic unit.

**2.** Polymer materials having liquid-crystalline phases, according to Claim 1, characterised in that the mesogenic groups correspond to the formula Ia and/or Ib

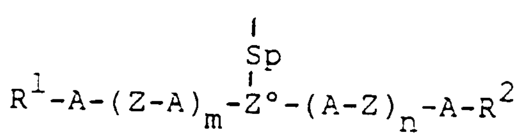 **Ia**

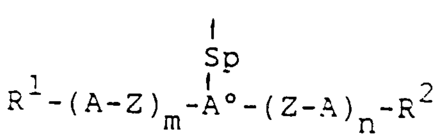 **Ib**

wherein
$R^1$ and $R^2$ are alkyl having 1-15 C atoms, in which furthermore one or two non-adjacent $CH_2$ groups can be replaced with -O-, -CO-, -O-CO-, -CO-O- and/or -CH = CH-, or one of the radicals $R^1$ and $R_2$

may furthermore be H, F, Cl, Br, NCS, $NO_2$, CN or $R^3$-A-Z,
$R^3$ is alkyl having 1-15 C atoms, in which furthermore one or two non-adjacent $CH_2$ groups can be replaced with -O-, -CO-, -O-CO-, -CO-O-and/or -CH=CH-, or is H, F, Cl, Br, NCS or CN, Sp is a covalent bond or a radical of the formula $-Q^1-w^1-Q^2-w^2$,
$Q^1$ and $Q^2$ independently of one another are each a chemical bond and/or an alkylene group having 2 to 25 C atoms, in which furthermore one or more non-adjacent $CH_2$ groups can be replaced with -O-, -S- or -N($C_1$-$C_6$-alkyl)-,
$W^1$ and $w^2$ independently of one another are each a chemical bond and/or a functional grouping from the group consisting of -O-, -S-, -SO-, $-SO_2-$, -N($C_1$-$C_6$-alkyl)-, -CO-, -CO-O-, -O-CO-, -O-CO-O-, -CO-S-, -S-CO-, -CO-NH($C_1$-$C_6$-alkyl), -NH($C_1$-$C_6$-alkyl)-CO, -O-CO-NH($C_1$-$C_6$-alkyl)- or -NH($C_1$-$C_6$-alkyl)-CO-O and $C_1$-$C_6$-alkyl,
A in each case is a 1,4-cyclohexylene group, in which furthermore one or two non-adjacent $CH_2$ groups can be replaced with -O- and/or -S-, and/or which can be substituted in the 1-position by $C_1$-$C_4$-alkyl, F, Cl, Br, $CF_3$ or CN, or is a piperidine-1,4-diyl or 1,4-bicyclo[2.2.2]octylene group or a 1,4-phenylene group which is unsubstituted or substituted by one or two F and/or Cl atoms and/or $CH_3$ groups and/or CN groups and in which furthermore one or more CH groups can be replaced with N,
$A^0$-Sp- is a radical of the formula (1) or (2)

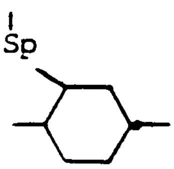 (1) 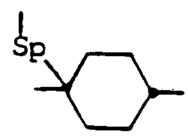 (2)

wherein furthermore one or two non-adjacent $CH_2$ groups can be replaced with -O- and/or -S-, and/or a $-CH_2$-CH group can be replaced with -N=C-or -CH=C- and/or which can be substituted in the 1-position by $C_1$-$C_4$-alkyl, F, Cl, Br, $CF_3$ or CN, or is a radical of the formula (3)

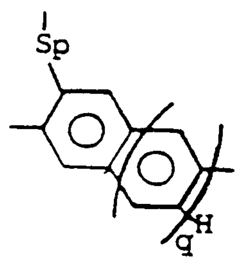 (3)

wherein q is 0 to 2 and wherein furthermore one or more CH groups can be replaced with N, and/or which can furthermore be substituted by one or two F and/or Cl atoms and/or $CH_3$ groups and/or CN groups, or is a radical (4), (5) or (6)

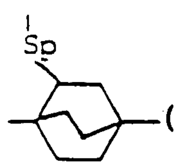 (4) 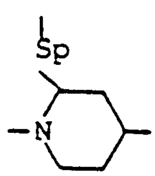 (5) 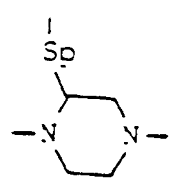 (6)

n and m are each 0 to 3,
Z in each case is -CO-O, -O-CO-, $-CH_2CH_2$, $-CHCN-CH_2-$, $-CH_2-CHCN-$, -CH=CH-, $-OCH_2-$, $-CH_2O-$, -CH=N-, -N=CH-, -NO=N-, -N=NO- or a single bond,
and $Z^0$-Sp is $-CH_2CHSp-$, $-CSpCN-CH_2-$, -CHCN-CHSp-, -CSp=CH-, -CHSp-O- or -CSp=n-,
with the proviso that m + n is 0 to 3.

**3.** Process for the preparation of polymer materials according to Claims 1 and 2, characterised in that compounds of the formula II

Y-M    II

wherein M is a mesogenic group of the formula Ia/b and Y is a functional group capable of polymerization or of being grafted, are polymerized, where Y is an alkylene group which has 2 to 5 C atoms and is located in the ω- or (ω-1)-position, or grafted onto polymers, where Y is a hydroxyl, amino, mercapto, epoxide or carboxyl group or one of its reactive derivatives.

**4.** Use of polymer materials according to Claims 1 and 2 as organic substrates in electronics, for fibre and film technology.

**5.** Use of polymer materials according to Claims 1 and 2 for amplitude modulation and/or frequency modulation of laser beams.

**6.** Use of polymer materials according to Claims 1 and 2 for optical data storage.

**Revendications**

**1.** Matières polymères présentant des phases à cristaux liquides, dont les groupes mésogènes, latéraux par rapport à l'axe longitudinal de la molécule, sont reliés au squelette polymère par l'intermédiaire d'un groupe cyclique ou d'un groupe de pont du motif mésogène.

**2.** Matières polymères présentant des phases à cristaux liquides selon la revendication 1, caractérisées en ce que les groupes mésogènes répondent à la formule Ia et/ou Ib :

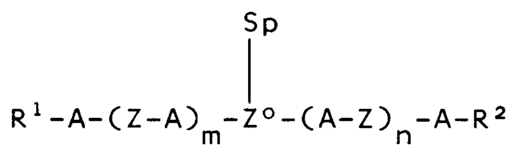

Ia

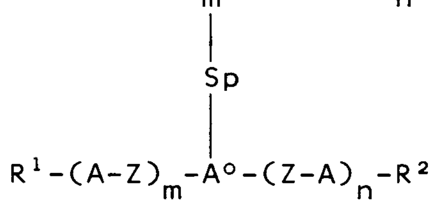

Ib

dans lesquelles :

$R^1$ et $R^2$ représentent des groupes alkyle en $C_1$-$C_{15}$ dans lesquels également un ou deux groupes $CH_2$ non voisins peuvent être remplacés par -O-, -CO-, -O-CO-, -CO-O-et/ou -CH=CH-, l'un des symboles $R^1$ et $R^2$ pouvant également représenter H, F, Cl, Br, NCS, $NO_2$, CN, $R^3$-A-Z,

$R^3$ représente un groupe alkyle en $C_1$-$C_{15}$ dans lequel également un ou deux groupes $CH_2$ non voisins peuvent être remplacés par -O-, -CO-, -O-CO-, -CO-O- et/ou -CH=CH-, ou H, F, Cl, Br, NCS ou CN,

Sp représente une liaison covalente ou un groupe de formule -$Q^1$-$w^1$-$Q^2$-$W^2$,

$Q^1$, $Q^2$ représentent chacun, indépendamment l'un de l'autre, une liaison chimique et/ou un groupe alkylène en $C_1$-$C_{25}$ dans lequel également un ou plusieurs groupes $CH_2$ non voisins peuvent être remplacés par -O-, -S-ou N-(alkyle en $C_1$-$C_6$)-,

$W^1$, $W^2$ représentent chacun, indépendamment l'un de l'autre, une liaison chimique et/ou un groupement fonctionnel choisi parmi -O-, -S-, -SO-, -$SO_2$-, -N-(alkyle en $C_1$-$C_6$)-, -CO-, -CO-O-, -O-CO-, -O-CO-O-, -CO-S-, -S-CO-, -CO-NH-(alkyle en $C_1$-$C_6$)-, -NH-(alkyle en $C_1$ -$C_6$ )-CO, -O-CO-NH-(alkyle en $C_1$-$C_6$)- ou -NH-(alkyle en $C_1$-$C_6$)-CO-O- et alkyle en $C_1$-$C_6$,

chacun des symboles A représente un groupe 1,4-cyclohexylène dans lequel également un ou deux

groupes $CH_2$ non voisins peuvent être remplacés par -O- et/ou -S-et/ou qui peut être substitué en position 1 par un groupe alkyle en $C_1$-$C_4$, F, Cl, Br, $CF_3$, CN, un groupe pipéridinel,4-diyle ou 1,4-bicyclo |2,2,2 |octylène, ou un groupe 1,4-phénylène non substitué par 1 ou 2 atomes de F et/ou de Cl et/ou groupes $CH_3$ et/ou CN, et dans lequel également un ou plusieurs groupes CH peuvent être remplacés par N,

$A^0$-Sp- représente l'un des groupes de formules (1) ou (2) :

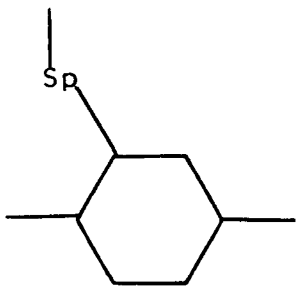
(1)

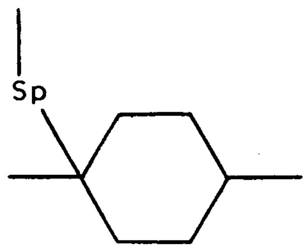
(2)

dans lesquelles également un ou deux groupes $CH_2$ non voisins peuvent être remplacés par -O- et/ou -S- et/ou un groupe $-CH_2-CH-$ peut être remplacé par -N = C- ou -CH = C-, et/ou qui peut être substitué par des groupes alkyle en $C_1$-$C_4$, F, Cl, Br, $CH_3$, CN, ou un groupe de formule (3) :

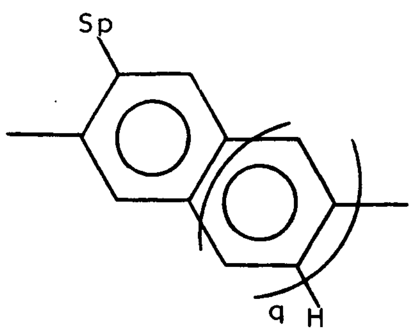
(3)

dans laquelle q a une valeur de 0 à 2 et dans lequel également un ou plusieurs groupes CH peuvent être remplacés par N et/ou qui peut également être substitué par un ou deux atomes de F et/ou de Cl et/ou groupes $CH_3$ et/ou CN,

ou l'un des groupes de formules (4), (5) ou (6) :

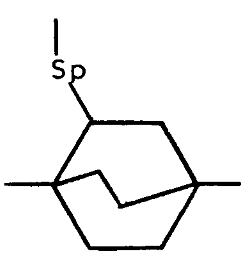
(4)

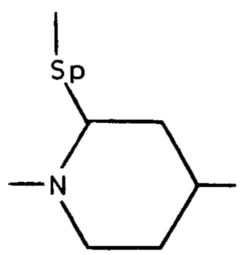
(5)

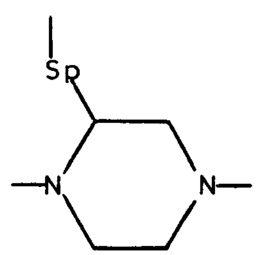
(6)

n et m ont chacun une valeur de 0 à 3,

chacun des symboles Z représente -CO-O-, -O-CO-, $-CH_2CH_2-$, $-CHCN-CH_2-$, $-CH_2-CHCN-$, -CH = CH-, $-OCH_2-$, $-CH_2O-$, -CH = N-, -N = CH-, -NO = N, -N = NO-, ou une liaison simple,

$Z^0$-Sp représente $-CH_2-CHSp-$, $-CSpCN-CH_2-$, -CHCN-CHSp-, -CSp = CH-, -CHSp-O- ou -CSp = N-,

sous réserve que m + n a une valeur de 0 à 3.

**3.** Procédé de préparation des matières polymères selon les revendications 1 et 2, caractérisé en ce que, partant de composés de formule II :

Y-M II

dans laquelle M représente un groupe mésogène de formule Ia/b et Y représente un groupe fonctionnel apte à la polymérisation ou au greffage,

on les polymérise lorsque Y représente un groupe alkylène en $C_2$-$C_5$ en position $\Omega$ ou $\overline{\Omega}$-1,

ou bien on les greffe sur des polymères lorsque Y représente un groupe hydroxy, amino, mercapto, époxyde ou carboxy ou l'un de leurs dérivés réactifs.

**4.** Utilisation des matières polymères selon les revendications 1 et 2 en tant que substrats organiques dans l'électronique pour la technique des fibres et des feuilles.

**5.** Utilisation des matières polymères selon les revendications 1 et 2 pour la modulation d'amplitude et/ou de fréquence de rayonnements lasers.

**6.** Utilisation de matières polymères selon les revendications 1 et 2 pour l'enregistrement optique de données.